# EUROPEAN PATENT APPLICATION

(11) **EP 4 631 705 A1**
(43) Date of publication of application: **15.10.2025**
(21) Application number: 24170104.4
(22) Date of filing: 12.04.2024
(51) Int. Cl.: B29D 35/10

(54) **SHOE LASTING AND FORMING APPARATUS**

(71) Applicant: Hsu, Yi-Hao, Taichung City 406020 (TW); Yusung A Tech Co., Ltd., Busan (KR)
(72) Inventor: HSU, YI-HAO, 406020 Taichung City (TW)
(74) Representative: Cabinet Chaillot

(57) **Abstract**

A shoe lasting and forming apparatus (3) mainly includes a mold set (31), a cavity (34) and a shoe last (33) respectively located in the mold set (31), and an injection channel (35) formed between the cavity (34) and an injection device (4). The mold set (31) has opposite first and second molds (311, 312) . A positioning unit (313) is pivotally installed on the second mold (312) where the shoe last (33) is installed and includes an operating region (314) . The cavity (34) is located between the shoe last (33) and the operating region (314) . Accordingly, the positioning unit (313) is rotatable, and an outward rotation of the positioning unit (313) enlarges a working space so that an outsole (B2) can be quickly positioned on the operating region (314) and a complete shoe can be easily taken out from the mold set (31). The apparatus (3) also prevents the displacement or deviation of the outsole (B2) and facilitates an increase in the yield rate of the production and a reduction in production costs.

## Description

### BACKGROUND OF THE INVENTION

### 1. Field of the Invention

This invention relates to a shoe lasting and forming apparatus and relates particularly to a shoe lasting and forming apparatus capable of enlarging a working space to position an outsole and take out a complete shoe speedily and smoothly, thereby improving the yield rate of the production and reducing the production costs.

### 2. Description of the Related Art

A complete shoe mainly includes a vamp, an outsole located below the vamp, and a midsole connected between the vamp and the outsole. The midsole is capable of absorbing shock, providing cushioning and propulsion, and attaining stable support. The complete shoe can achieve different functions and different wearing experience through changing the thickness or the material of the midsole. The injection molding technology is one of the main technologies currently used to produce midsoles. The midsoles produced by the injection molding technology take advantages of lightweight, rich colors, great wear resistance and corrosion resistance, and low production costs whereby the injection molding technology is widely used to produce the midsoles nowadays.

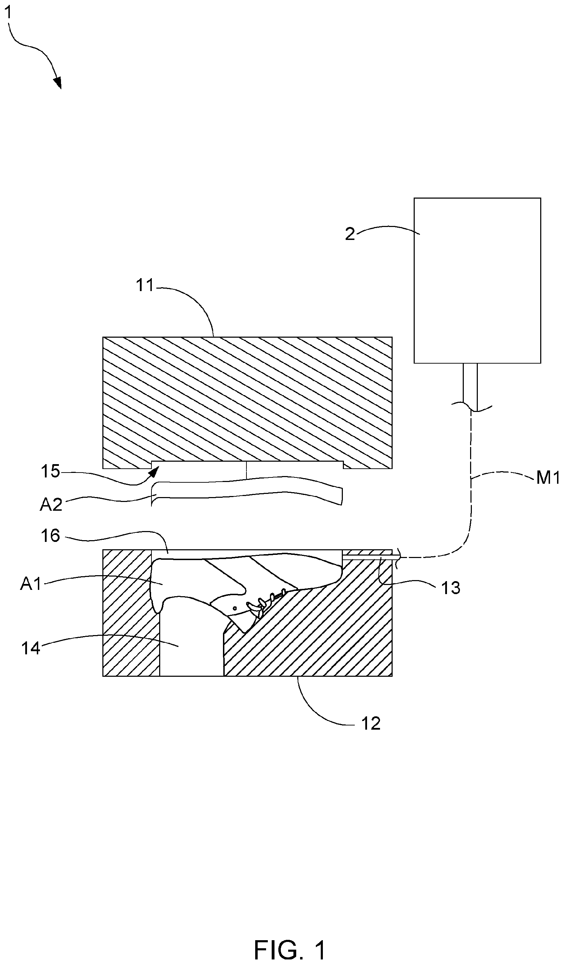

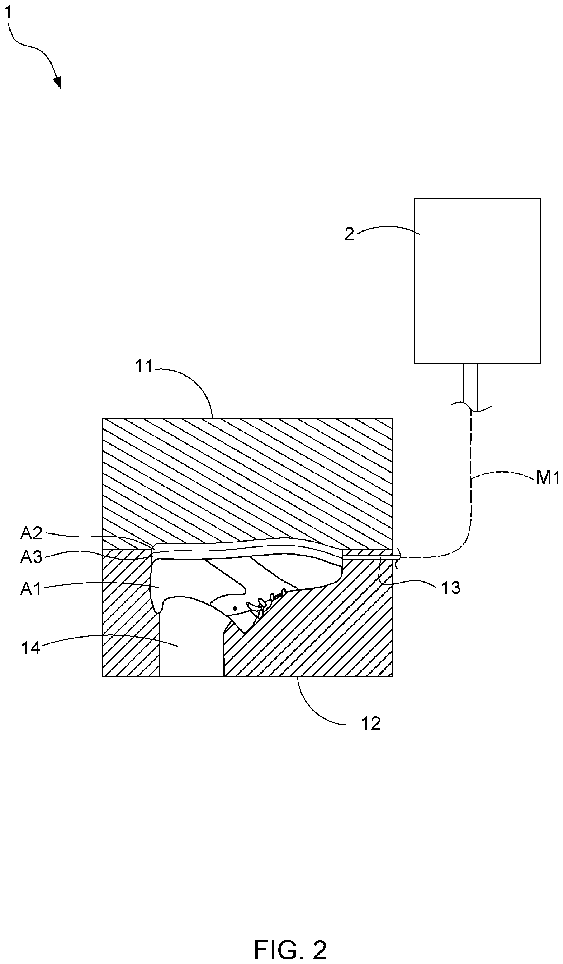

Referring to Figs. **1** and **2****,** the injection molding technology is executed through a conventional shoe lasting and forming apparatus **1.** The shoe lasting and forming apparatus **1** comprises a first mold **11,** a second mold **12** located in opposing relationship to the first mold **11,** at least one injection channel **13** formed in the first mold **11** and the second mold **12,** a shoe last **14** adapted to be covered by a vamp **A1,** an accommodation unit **15** disposed on the first mold **11** for accommodating an outsole **A2,** and a cavity **16** formed between the shoe last **14** and the accommodation unit **15.** An injection device **2** is adapted to cooperate with the shoe lasting and forming apparatus **1** for executing an injection operation of a material **M1.**

During an operation of the shoe lasting and forming apparatus **1,** the vamp **A1** is arranged on the shoe last **14** to allow the shoe last **14** to be covered by the vamp **A1.** The vamp **A1** is then tightened in order that the vamp **A1** and the shoe last **14** are fitted tightly. Meanwhile, the outsole **A2** is placed in the accommodation unit **15.** The first mold **11** then moves downwards to engage with the second mold **12** and assume a close state. After that, the injection device **2** injects the material **M1** into the first mold **11** and the second mold **12** under a certain temperature and pressure. The injection operation of the material **M1** is simply shown by a dotted line in Fig. **1****.** The material **M1** then enters into the cavity **16** through the injection channel **13.** After the material **M1** cools down and becomes solid, a midsole **A3** is formed. The vamp **A1** and the outsole **A2** are combined together through the midsole **A3** to thereby produce a complete shoe (not shown) . After the first mold **11** moves upwards, the complete shoe can be taken out from the shoe last **14** for following processing operations.

However, a working space defined between the first mold **11** and the second mold **12** is limited because the first mold **11** and the second mold **12** are located in opposing relationship, namely the first mold **11** is located above the second mold **12.** Therefore, it is difficult to put the outsole **A2** into the accommodation unit **15** quickly while separating the first mold **11** from the second mold **12** to assume an open state. Owing to the gravity, the movements of the first mold **11** may cause the displacement or deviation of the outsole **A2** easily, and thus the outsole **A2** is formed unevenly. The midsole **A3** may also be formed unsuccessfully. Thus, the yield rate of the production is reduced. The production costs are increased owning to the waste of the material **M1** caused by the defective midsole **A3.** Further, the complete shoe is unable to be taken out from the shoe last **14** quickly, and that results in poor working efficiency. The complete shoe may also be damaged while being taken out from the shoe last **14,** and that requires to be improved.

### SUMMARY OF THE INVENTION

The object of this invention is to provide a shoe lasting and forming apparatus capable of effectively enlarging a working space so as to situate an outsole and remove a complete shoe quickly, improving the operating convenience, increasing the working efficiency and the yield rate of the production, and reducing the production costs.

The shoe lasting and forming apparatus of this invention is adapted to situate a vamp and an outsole and cooperate with an injection device. The injection device is configured to inject a material in the shoe lasting and forming apparatus so as to combine the vamp and the outsole, and then produce a complete shoe. The shoe lasting and forming apparatus comprises a mold set defining an accommodation space therein, a shoe last installed in the accommodation space, a cavity formed in the accommodation space and located relative to the shoe last, and at least one injection channel formed in the mold set and communicating with the cavity. The injection channel is formed between the injection device and the cavity. The mold set has a first mold, a second mold on which the shoe last is disposed, and a positioning unit pivotally installed on the second mold, thereby allowing the positioning unit to be rotatable. The first mold and the second mold are located in opposing relationship. The positioning unit has an operating region facing the cavity. The cavity is formed between the shoe last and the positioning unit when the first mold and the second mold are separated to assume an open state. After the vamp is fitted on the shoe last, the positioning unit is rotated outwards, thereby enlarging a working space whereby the outsole can be quickly situated at the operating region and a complete shoe can be easily taken out from the mold set. The apparatus also prevents the displacement or deviation of the outsole caused by the movements of the mold set, attains an improved working efficiency and operating convenience, facilitates an increase in the yield rate of the production, and reduces the production costs.

Preferably, the shoe last has a driving unit pivotally installed on the second mold and a last model fixed to the driving unit and adapted to be fitted by the vamp whereby a rotating operation of the driving unit allows the last model to be moved out from or returned back to the accommodation space.

### BRIEF DESCRIPTION OF THE DRAWINGS

- Fig. **1**: is a schematic view showing a conventional lasting and forming apparatus;
- Fig. **2**: is a schematic view showing an operation of the conventional lasting and forming apparatus;
- Fig. **3**: is a schematic view showing a first preferred embodiment of this invention;
- Fig. **4**: is a schematic view showing partial elements of the first preferred embodiment of this invention; and
- Fig. **5**: is a schematic view showing an operation of the first preferred embodiment of this invention.

### DETAILED DESCRIPTION OF THE PREFERRED EMBODIMENTS

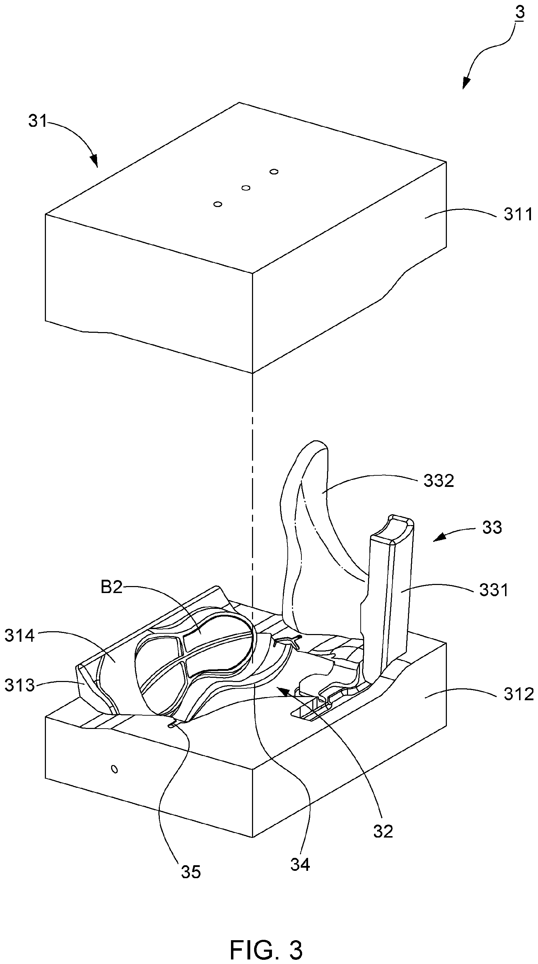

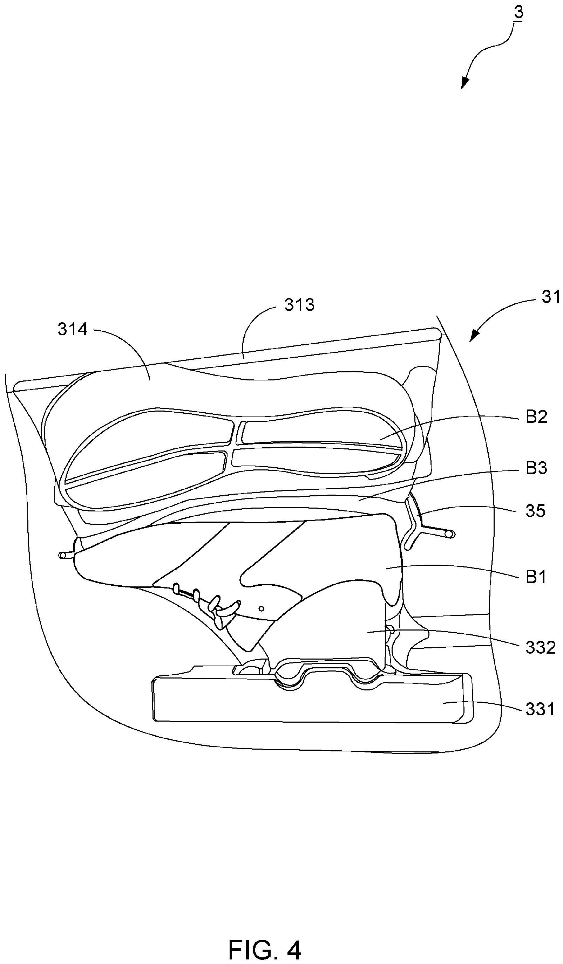

Referring to Figs. **3****,** **4** and **5****,** a first preferred embodiment of a shoe lasting and forming apparatus **3** of this invention is disclosed. The shoe lasting and forming apparatus **3** is adapted to accommodate a vamp **B1** and an outsole **B2** and cooperate with an injection device **4.** The injection device **4** is connected with the shoe lasting and forming apparatus **3** and aimed at injecting a material **M2** into the lasting and forming apparatus **3** to produce a midsole **B3.** The vamp **B1** and the outsole **B2** are combined by the midsole **B3,** thereby producing a complete shoe (not shown) . The shoe lasting and forming apparatus **3** comprises a mold set **31,** an accommodation space **32** defined in the mold set **31,** a shoe last **33** pivotally installed on the mold set **31** and located in the accommodation space **32,** a cavity **34** formed in the mold set **31** and located relative to the shoe last **33,** and at least one injection channel **35** formed in the mold set **31.** The injection channel **35** is formed between the injection device **4** and the cavity **34.** The material **M2** of the injection device **4** enters into the cavity **34** through the injection channel **35.** The shoe last **33** is adapted to be covered by the vamp **B1** so that the vamp **B1** is positioned duly. The complete shoe is formed in the mold set **31** after completing an injection operation of the material **M2.** The injection device **4** is simply shown in Fig. **4****.** The scope of the injection device **4** should not be limited to the embodiment shown in the figures.

Referring to Figs. **3** and **4****,** the mold set **31** has a first mold **311,** a second mold **312** situated in opposing relationship to the first mold **311,** a positioning unit **313** pivotally installed on the second mold **312,** and an operating region **314** formed on the positioning unit **313** and facing the cavity **34.** The operating region **314** is adapted to accommodate the outsole **B2.** In this preferred embodiment, the second mold **312** is arranged to be under the first mold **311.** The shoe last **33** has a driving unit **331** pivotally installed on the second mold **312** and a last model **332** fixed to the driving unit **331** and adapted to be covered by the vamp **B1.** The last model **332** is located between the driving unit **331** and the cavity **34.** The cavity **34** is formed between the last model **332** and the operating region **314** while separating the first mold **311** from the second mold **312** to assume an open state of the mold set **31.**

Referring to Figs. **3** to **5****,** during an operation of the shoe lasting and forming apparatus **3,** the vamp **B1** should be arranged on the last model **322** to allow the last model **322** to be covered by the vamp **B1.** Because the driving unit **331** of the shoe last **33** is pivotally disposed on the second mold **312,** the shoe last **33** is rotatable, namely an outward rotation of the driving unit **331** allows the last model **332** to be turned into an upright position as shown in Fig. **3****,** and that facilitates an installation of the vamp **B3.** After that, the vamp **B1** is tightened in order that the vamp **B1** and the last model **332** are fitted tightly. The driving unit **331** is then rotated inwards to allow the last model **332** with the vamp **B1** to return back to and be accommodated in the second mold **312.** Therefore, the vamp **B1** is positioned duly.

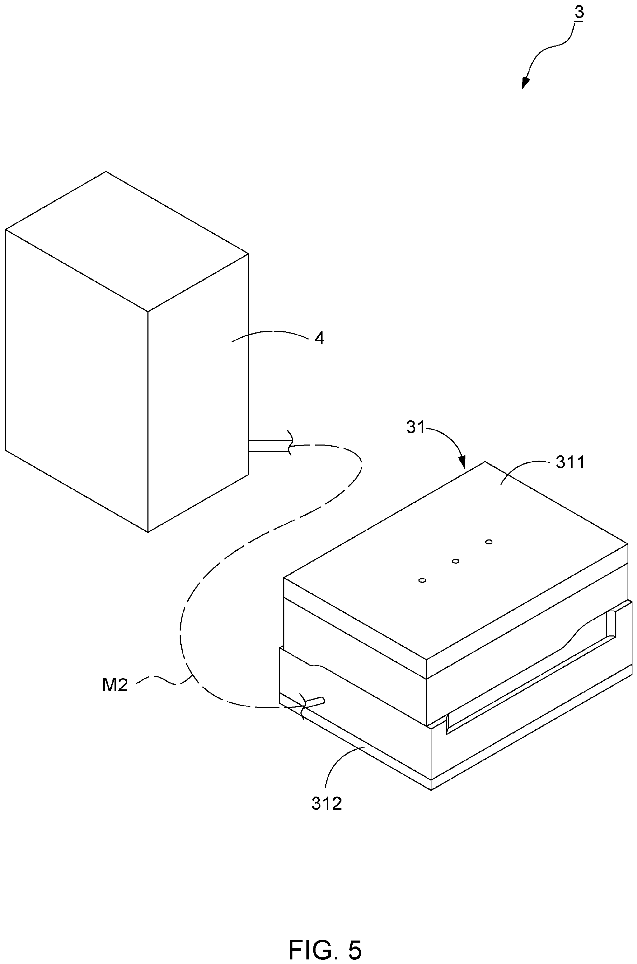

Because the positioning unit **313** is pivotally disposed on the second mold **312,** the positioning unit **313** is rotatable. During an outward rotation of the positioning unit **313,** the operating region **314** is turned to face the first mold **311.** The outward rotation of the positioning unit **313** enlarges a working space so that the outsole **B2** is placed and situated on the operating region **314** speedily. After the outsole **B2** is positioned on the operating region **314,** the positioning unit **313** rotates inwards to allow the operating region **314** with the outsole **B2** to return back to and face the cavity **34.** Thus, the outsole **B2** is positioned duly in the accommodation space **32.** The first mold **311** and the second mold **312** are then engaged together to assume a close state. The injection device **4** injects the melted material **M2** into the mold set **31** under a certain temperature and pressure. The injection operation of the material **M2** is simply shown by a dotted line in Fig. **5****.** The type of the material **M2** should not be limited. Here takes an example that the melted material **M2** is applied. The material **M2** then enters into the cavity **34** through the injection channel **35** and fully fills the cavity **34.** After the material **M2** cools down and becomes solid, the midsole **B3** is formed in the cavity **34.** The midsole **B3** bonds the vamp **B1** and the outsole **B2** together to thereby provide the complete shoe. Finally, the first mold **311** is separated from the second mold **312** to assume the open state. The positioning unit **313** and the shoe last **33** are turned outwards respectively, thereby taking the complete shoe out from the last model **332** quickly and easily through the enlarged working space with the aid of the outward rotations of the positioning unit **313** and the shoe last **33.** The complete shoe is then ready for following processing operations after being taken out. Thus, the rotating operation of the positioning unit **313** enlarges the working space for placing the outsole **B2** easily and taking out the complete shoe from the mold set **31** quickly, thereby facilitating improvements of operating convenience and working efficiency, and preventing the displacement or deviation of the outsole **B2.** Hence, the outsole **B2** is formed duly without becoming uneven, and that improves the wearing experience and increases the yield rate of the production. Further, the material **M2** is not wasted. The complete shoe will not be damaged while being removed from the mold set **31,** thereby effectively reducing the production costs.

To sum up, the shoe lasting and forming apparatus of this invention takes an advantage that the positioning unit is pivotally disposed on the second mold to enlarge the working space so that the outsole is positioned quickly and the complete shoe is taken out easily with the aid of the rotating operation of the positioning unit. The apparatus also prevents the displacement or deviation of the outsole, attains the improvements of operating convenience, and facilitates the increase in the working efficiency and yield rate of the production, and achieves the reduction in the production costs.

While the embodiments of this invention are shown and described, it is understood that further variations and modifications may be made without departing from the scope of this invention.

## Claims

1. A shoe lasting and forming apparatus (3) adapted to accommodate a vamp (B1) and an outsole (B2) and cooperate with an injection device (4), said injection device (4) being configured to subject a material (M2) to an injection operation in said shoe lasting and forming apparatus (3) to attain a combination of said vamp (B1) and said outsole (B2), thereby producing a complete shoe after combining said vamp (B1) with said outsole (B2), wherein said lasting and forming apparatus (3) comprising a mold set (31), an accommodation space (32) formed in said mold set (31), a shoe last (33) disposed in said accommodation space (32) and adapted to be covered by said vamp (B1), a cavity (34) formed in said mold set (31) and located relative to said shoe last (33), and at least one injection channel (35) disposed between said injection device (4) and said cavity (34), said complete shoe being formed in said mold set (31) after said injection operation of said material (M2) is executed, said mold set (31) including a first mold (311) and a second mold (312) disposed in opposing relationship to said first mold (311);
**characterized in that** a positioning unit (313) is pivotally disposed on said second mold (312) so that said positioning unit (313) is rotatable, said positioning unit (313) including an operating region (314) facing said cavity (34) and adapted to accommodate said outsole (B2), said cavity (34) being located between said shoe last (33) and said positioning unit (313) while separating said first mold (311) from said second mold (312) to assume an open state, thereby allowing said outsole (B2) to be quickly positioned on said operating region (314) and allowing said complete shoe to be easily taken out from said mold set (31) with the aid of a rotating operation of said positioning unit (313) .

2. The apparatus (3) according to claim 1, wherein said shoe last (33) includes a driving unit (331) pivotally disposed on said second mold (312) and a last model (332) disposed on said driving unit (331) and adapted to be covered by said vamp (B1), said driving unit (331) being rotatable so that said last model (332) is allowed to leave or return back to said accommodation space (32) with the aid of a rotating operation of said driving unit (331) .
